Europäisches Patentamt

European Patent Office

Office européen des brevets

(11) Publication number: **0 165 724**
**B1**

## (12) EUROPEAN PATENT SPECIFICATION

(45) Date of publication of patent specification: **03.05.89**

(51) Int. Cl.⁴: **B 29 C 39/10** // B29L31:56

(21) Application number: **85303691.1**

(22) Date of filing: **24.05.85**

(54) Screw caps.

(30) Priority: **19.06.84 GB 8415609**

(43) Date of publication of application:
**27.12.85 Bulletin 85/52**

(45) Publication of the grant of the patent:
**03.05.89 Bulletin 89/18**

(84) Designated Contracting States:
**AT BE CH DE FR GB IT LI LU NL SE**

(56) References cited:
**GB-A-2 051 660**

(73) Proprietor: **W.R. Grace & Co.-Conn. (a Connecticut corp.)**
**Grace Plaza 1114 Avenue of the Americas**
**New York New York 10036 (US)**

(72) Inventor: **Sinnott, Kenneth Martin**
**Church End Hilton**
**Huntingdon Cambridgeshire (GB)**

(74) Representative: **Lawrence, Peter Robin Broughton et al**
**GILL JENNINGS & EVERY 53-64 Chancery Lane**
**London WC2A 1HN (GB)**

Courier Press, Leamington Spa, England.

## Description

This invention relates to plastic caps having a moulded-in thread by which the caps can be screwed onto bottles or other containers.

It is generally desirable to obtain a good seal between the cap and the bottle at low removal torque values. For instance if the bottle is to be internally pressurised, e.g. by containing carbonated beverage, the seal should be gas tight and yet the cap should be easily removable by hand. It is accepted that the internal diameter of the cap must conform accurately to the external diameter of the neck of the bottle or other container. If the cap diameter is too large the cap will fit loosely and the seal will be poor. If the cap diameter is too small it will be very difficult to screw the cap onto or off the container.

It has therefore become accepted that the caps must have a very accurately controlled diameter. For instance if the cap was intended to have a diameter of 30.0 mm it is accepted that the mean diameter of all the caps in a batch should be 30.0 and that the standard deviation of the diameters should be below 0.05 mm or, expressed as a percentage, below about 0.16% of the mean.

Plastic caps are generally made by injection moulding. The moulds in which they are made can be machined very accurately and so if there is uniform supply of material to the moulds and if the conditions during moulding are uniform the resultant caps will be uniform. Commercially a plurality of caps are generally made in a single moulding operation by use of a moulding block containing a plurality of moulds in it supplied by a single feed of plastic material. When the number of moulds in the mould block is relatively low, it is possible so to design and operate the mould that substantially uniform conditions prevail in each mould, and all the caps are sufficiently uniform that they comply with the required standard deviation in diameter. This has, therefore, been a commercially satisfactory way of producing plastic screw caps, complying with the required standard deviation. However, for commercial reasons it would be desirable to increase the number of moulds in a mould block and, as the number increases, it becomes more difficult to maintain the conditions within the mould block sufficiently uniform that the resultant caps comply with the required standard deviation. There has therefore been an increasing tendency to have to reject entire sets of caps because their standard deviation is sufficiently high that it would be expected that unacceptable sealing properties would be obtained in a statistically significant number of instances.

In order to improve the seal, the plastic screw caps have to be lined with a gasket. This gasket may be inserted as a preformed disc or annulus, or may be flowed in as a melt, and in either of these instances it is not necessary deliberately to heat the caps. Alternatively, the gasket may be flowed into each cap as a plastisol, in which event the plastisol, and therefore the caps, have to be heated to effect fluxing of the plastisol. It is known that this heating releases stress in the caps and causes shrinkage of the caps, generally by about 0.4% of the mean diameter, and so the mould size and the initial cap diameter have to be selected sufficiently above the desired cap diameter to accommodate this shrinkage. Some such methods are described in GB—A—2 051 660.

We have now surprisingly observed that the shrinkage on heating results in a reduction in the standard deviation of the diameter. This surprising observation permits us, for the first time, to use caps having a standard deviation before the fluxing operation greater than we would otherwise consider tolerable, and to rely upon the reduction in standard deviation during the fluxing to bring the standard deviation down to tolerable limits. As a result of this discovery the manufacture of the injection moulded caps can be conducted on a larger scale and with less risk of rejects than previously.

In the invention, therefore, a plurality of plastic screw caps of substantially uniform diameter are each lined with a gasket by flowing into each cap a plastisol and then fluxing the plastisol by heating the caps and the plastisol and, before the heating, the diameters of the caps vary from the mean by a standard deviation that is greater than is desired and the heating reduces the standard deviation by at least 10%. Generally the reduction is at least 15% and preferably about 20%.

Generally the standard deviation before the heating is at least 0.17% of the mean and after the heating is not more than 0.16% of the mean. Conveniently the caps initially have a diameter that varies by at least 0.18% of the mean, and preferably the caps after the heating have a diameter that varies from the mean by a standard deviation of 0.15% or less.

The invention is of particular value applied to caps having a diameter of around 30 mm, typically in the range 25 to 35 mm, and in such caps the standard deviation before heating is generally at least 0.051 mm, and conveniently is at least 0.054 mm, for instance up to 0.06 mm, whilst the standard deviation after the heating should be not more than 0.048 mm and preferably not more than 0.046 mm.

The plastic caps are preferably made of polypropylene or ethylene-propylene copolymer by injection moulding, with 64 or more caps generally being moulded simultaneously in a single mould block. The conditions in the mould block are such that the standard deviation of the diameters of the caps varies as specified above, preferably by not more than 2% from the mean. Known methods of injection moulding may be used.

The resultant caps are lined with a gasket by flowing a plastisol into each cap. Lining may be by conventional methods, for instance, while rotating the cap, to give a gasket of the desired shape, often annular. The plastisol may be formulated in known manner as a dispersion of polyvinyl chloride resin in plasticiser. There is a discussion of suitable cap forming materials and plastisols in British Patent Specification 2 051 660 B.

The plastisol must then be fluxed and for this purpose a plurality of the caps, lined with the liquid plastisol, are subjected to appropriate heat conditions. In the invention these heating conditions, including intensity and duration, must be such as to permit the required reduction in standard deviation of diameter and to result in fluxing of the plastisol, but they must, of course, not result in melting or other damage to the screw caps. We generally find that heating conditions that will result in fluxing of the plastisol without melting or other damage to the screw caps will also give the desired reduction in the standard deviation of the diameter from the mean. If the heating does not give this required reduction in a single pass through an oven, the caps should be subjected to one or more further passes through the oven and/or subjected to a higher temperature or a longer duration in the oven, provided always that this does not result in melting of the caps.

As explained in British Patent Specification 2 051 660 B, it can be difficult to select heating conditions that will both give adequate fluxing of the plastisol and no damage to the caps, if the heating is solely a passage through an oven. The method described in that specification involves heating in two stages with the second stage only including microwave heating. For instance the first stage may be by a conventional hot air or other oven. This method is therefore preferred in the invention, and has proved to be a particularly effective way of both achieving the desired fluxing of the plastisol and the desired reduction in standard deviation.

The preferred method of the invention, therefore, comprises lining injection moulded caps formed of a high melting olefine polymer which is substantially transparent to microwave radiation, the caps having diameters varying by an unacceptably high standard deviation from the mean, flowing a polyvinyl chloride resin plastisol into the caps and forming it into the configuration of a gasket, heating the caps by conventional heat energy, for instance, in a hot air oven, and then transferring them to a heated microwave oven, all as described, and using materials as described, in British Patent Specification 2 051 660 B. If necessary the caps may be passed through the hot air oven and/or the microwave oven two or more times in order to achieve the required reduction in standard deviation.

In a typical example, a large batch of polypropylene injection moulded caps was recorded as having a mean external diameter of 29.636 mm, with a standard deviation of 0.05765 mm (0.19%), the smallest caps having a diameter of 29.47 mm, and the largest caps having a diameter of 29.78 mm.

The caps were then lined with a plastisol, heated in a hot air oven and then heated in a microwave oven all as described in British Patent

Specification 2 051 660 B. The mean diameter of the caps was then recorded as 29.524 mm with the standard deviation having been reduced to 0.0454 mm (0.15%), the smallest caps having a diameter of 29.3 mm and the largest caps having a diameter of 29.62 mm.

In addition to reducing the standard deviation and the overall spread of diameters, it was also noticed that the frequency of caps having diameters of or very close to the mean diameter was increased.

The fit of a cap on a bottle is influenced by the internal diameter of the cap rather than the external diameter.

In this example the external diameters were recorded for simplicity, but the actual internal diameters could be recorded if desired merely by subtracting twice the wall thickness from the quoted values.

## Claims

1. A process in which a plurality of plastic screw caps of substantially uniform diameter are each lined with a gasket by flowing into each cap a plastisol and then fluxing the plastisol by heating the caps and the plastisol characterised in that, before the heating, the diameters of the caps vary from the mean by a standard deviation that is greater than is desired and the heating reduces the standard deviation by at least 10% of the mean.

2. A process according to claim 1 in which the heating reduces the standard deviation by at least 15% of the mean.

3. A process according to claim 1 in which the heating reduces deviation by at at least 20%.

4. A process according to any preceding claim in which, before the said heating, the diameters of the caps vary from the mean by a standard deviation of at least 0.17% of the mean and after the heating the diameters of the caps varies from the mean by a standard deviation of not more than 0.16%.

5. A process according to claim 4 in which before the heating the diameters of the caps vary from the mean by a standard deviation of at least 0.18% of the mean.

6. A process according to any preceding claim in which before the heating the diameters of the caps vary from the mean by a standard deviation of at least 0.18% of the mean and after the heating the diameters of the caps varies from the mean by a standard deviation of not more than 0.15% of the mean.

7. A process according to any preceding claim in which the caps are of substantially uniform diameter having a value within the range 25 to 35 mm and in which, before the heating, the diameters of the caps vary from the mean by a standard deviation of at least 0.051 mm and after the heating the diameters of the caps varies from the mean by a standard deviation of not more than 0.048 mm.

8. A process according to claim 7 in which

before the heating the diameters of the caps vary from the mean by a standard deviation of at least 0.054 mm.

9. A process according to claim 7 in which, before the heating, the diameters of the caps vary from the mean by a standard deviation of at least 0.054 mm and after the heating the diameters of the caps vary from the mean by a standard deviation of not more than 0.046 mm.

10. A process according to any preceding claim in which the caps are formed from an olefin polymer selected from polypropylene and ethylene-propylene copolymers.

11. A process according to any preceding claim in which the caps have been moulded by injection moulding in a block and in which at least 64 of the caps were simultaneously moulded in a single block.

12. A process according to any preceding claim in which the caps are formed of an olefin polymer that is substantially transparent to microwave radiation, the plastisol is a polyvinyl chloride plastisol and the heating of the caps is conducted in two stages, and in which the second stage only of the heating is conducted by heating that includes microwave heating.

**Patentansprüche**

1. Ein Verfahren, bei dem jede einer Mehrzahl von Kunststoffschraubkappen von im wesentlichen gleichem Durchmesser mit einer Flachdichtung ausgekleidet wird, indem man in jede Kappe ein Plastisol gießt und dann das Plastisol durch Erhitzen der Kappen und des Plastisols weich macht, dadurch gekennzeichnet, daß die Kappendurchmesser vor dem Erhitzen von dem Mittelwert um eine Standard-Abweichung variieren, die größer ist als erwünscht, sowie dadurch, daß das Erhitzen die Standard-Abweichung um mindestens 10% des Mittelwerts verringert.

2. Ein Verfahren nach Anspruch 1, bei dem das Erhitzen die Standard-Abweichung um mindestens 15% des Mittelwerts verringert.

3. Ein Verfahren nach Anspruch 1, bei dem das Erhitzen die Standard-Abweichung um mindestens 20% des Mittelwerts verringert.

4. Ein Verfahren nach einem der vorstehenden Ansprüche, bei dem die Durchmesser der Kappen vor dem besagten Erhitzen von dem Mittelwert um eine Standard-Abweichung von mindestens 0,17% des Mittelwerts variieren und die Durchmesser der Kappen nach dem Erhitzen von dem Mittelwert um eine Standard-Abweichung von nicht mehr als 0,16% variieren.

5. Ein Verfahren nach Anspruch 4, bei dem die Durchmesser der Kappen vor dem Erhitzen von dem Mittelwert um eine Standard-Abweichung von mindestens 0,18% des Mittelwerts variieren.

6. Ein Verfahren nach einem der vorstehenden Ansprüche, bei dem die Durchmesser der Kappen vor dem Erhitzen von dem Mittelwert um eine Standard-Abweichung von mindestens 0,18% des Mittelwerts variieren und die Durchmesser der Kappen nach dem Erhitzen von dem Mittelwert um eine Standard-Abweichung von nicht mehr als 0,15% des Mittelwerts variieren.

7. Ein Verfahren nach einem der vorstehenden Anspnüche, bei dem die Kappen einen im wesentlichen gleichen Durchmesser mit einem wert innerhalb der Spanne von 25 bis 35 mm aufweisen und bei dem die Durchmesser der Kappen vor dem Erhitzen von dem Mittelwert um eine Standard-Abweichung von mindestens 0,051 mm variieren und die Durchmesser der Kappen nach dem Erhitzen von dem Mittelwert um eine Standard-Abweichung von nicht mehr als 0,048 mm variieren.

8. Ein Verfahren nach Anspruch 7, bei dem die Durchmesser der Kappen vor dem Erhitzen von dem Mittelwert um eine Standard-Abweichung von mindestens 0,054 mm variieren.

9. Ein Verfahren nach Anspruch 7, bei dem Durchmesser der Kappen vor dem Erhitzen von dem Mittelwert um eine Standard-Abweichung von mindestens 0,054 mm variieren und die Durchmesser der Kappen nach dem Erhitzen von dem Mittelwert um eine Standard-Abweichung von nicht mehr als 0,046 mm variieren.

10. Ein Verfahren nach einem der vorstehenden Ansprüche, bei dem die Kappen aus einem unter Polypropylen- und Äthylen-Polypropylen-Copolymeren ausgewählten Olefinpolymer gefertigt sind.

11. Ein Verfahren nach einem der vorstehenden Ansprüche, bei dem die Kappen durch Spritzgießen in einem Block gefertigt wurden und bei dem mindestens 64 der Kappen gleichzeitig in einem einzigen Block gefertigt wurden.

12. Ein Verfahren nach einem der vorstehenden Ansprüche, bei dem die Kappen aus einem für Mikrowellenstrahlung im wesentlichen durchlässigen Olefinpolymer gefertigt sind, das Plastisol ein Polyvinylchloridplastisol ist und das Erhitzen der Kappen in zwei Stufen vor sich geht, und bei dem nur die zweite Erhitzungsstufe Erhitzen u.a. durch Mikrowellenerhitzung bedingt.

**Revendications**

1. Procédé dans lequel un certain nombre de couvercles à vis en plastique d'un diamètre sensiblement uniforme sont enduits d'une garniture par écoulement dans chaque couvercle d'un plastisol puis fluidification du plastisol par chauffage des couvercles et du plastisol, caractérisé en ce que, avant le chauffage, les diamètres des couvercles varient par rapport à la moyenne d'un écart standard qui est plus important qu'on le souhaite et le chauffage réduit l'écart standard d'au moins 10% de la moyenne.

2. Procédé selon la revendication 1, où le chauffage réduit l'écart standard d'au moins 15% de la moyenne.

3. Procédé selon la revendication 1, où le chauffage réduit l'écart standard d'au moins 20%.

4. Procédé selon toute revendication précédente, où, avant ledit chauffage, les diamètres des couvercles varient par rapport à la moyenne, d'un écart standard d'au moins 0,17% de la moyenne et après le chauffage, les diamètres des couvercles varient par rapport à la moyenne, d'un écart standard de pas plus de 0,16 %.

5. Procédé selon la revendication 4, où avant le chauffage les diamètres des couvercles varient par rapport à la moyenne d'un écart standard d'au moins 0,18% de la moyenne.

6. Procédé selon toute revendication précédente où, avant le chauffage, les diamètres des couvercles varient de la moyenne d'un écart standard d'au moins 0,18% de la moyenne et après le chauffage, les diamètres des couvercles varient de la moyenne d'un écart standard de pas plus de 0,15%% de la moyenne.

7. Procédé selon toute revendication précédente, où les couvercles sont d'un diamètre sensiblement uniforme, ayant une valeur comprise entre 25 et 35 mm et où, avant le chauffage, les diamètres des couvercles varient par rapport à la moyenne, d'un écart standard d'au moins 0,051 mm et après le chauffage, les diamètres des couvercles varient par rapport à la moyenne d'un écart standard de pas plus de 0,048 mm.

8. Procédé selon la revendication 7 où, avant le chauffage, les diamètres des couvercles varient par rapport à la moyenne d'un écart standard d'au moins 0,054 mm.

9. Procédé selon la revendication 7 où, avant le chauffage, les diamètres des couvercles varient par rapport à la moyenne d'un écart standard d'au moins 0,054 mm et après le chauffage, les diamètres des couvercles varient par rapport à la moyenne d'un écart standard de pas plus de 0,046 mm.

10. Procédé selon toute revendication précédente, où les couvercles sont formés d'un polymère d'oléfine choisi parmi le polypropylène et des copolymères d'éthylène-propylène.

11. Procédé selon toute revendication précédente, où les couvercles ont été moulés par moulage par injection dans un bloc et où au moins 64 des couvercles ont été moulés simultanément dans un seul bloc.

12. Procédé selon toute revendication précédente, où les couvercles sont formés d'un polymère d'oléfine qui est sensiblement transparent à un rayonnement de micro-ondes, le plastisol est un plastisol de chlorure de polyvinyle et le chauffage des couvercles est entrepris en deux stades, et où le second stade seul du chauffage est entrepris par un chauffage qui comprend un chauffage par micro-ondes.